# EUROPEAN PATENT SPECIFICATION

(11) **EP 0 493 684 B1**
(45) Date of publication and mention of the grant of the patent: **17.01.1996**
(21) Application number: 91120517.7
(22) Date of filing: 29.11.1991
(51) Int. Cl.: G01N 27/333

(54) **Method of producing pH-responsive membrane**
Verfahren zum Herstellen einer pH-empfindlichen Membran
Procédé de fabrication d'une membrane sensible au pH

(30) Priority: 30.11.1990 JP 339487/90
(43) Date of publication of application: 08.07.1992
(73) Proprietor: HORIBA, LTD., Minami-ku Kyoto (JP)
(72) Inventor: Tomita, Katsuhiko, Ohtsu-city, Shiga-prefecture (JP)
(74) Representative: TER MEER - MÜLLER - STEINMEISTER & PARTNER

(56) References cited:
- WO-A-88/09501
- PATENT ABSTRACTS OF JAPAN vol. 7, no. 57 (P-181)(1202) 9 March 1983 & JP-A-57 203 946
- MATERIALS RESEARCH SOCIETY SYMPOSIA PROCEEDINGS. vol. 73, 1986, PITTSBURGH US pages 725 - 730; L.A. SILVERMAN ET AL: 'Characterization of sol-gel derived tantalum oxide films'
- MATERIALS RESEARCH SOCIETY SYMPOSIA PROCEEDINGS. vol. 180, 1990, PITTSBURGH US pages 611 - 616; H. HIRASHIMA ET AL: "Densification and crystallization of thin transition metal oxide coatings from metal alkoxides"

## Description

### Background of the Invention

### Field of the Invention

The present invention relates to a method of producing a pH-responsive membrane, in particular to a method of producing a pH-responsive membrane formed of a thin film made of tantalum pentaoxide.

### Description of the Prior Art

As the conventional method of producing a pH-responsive membrane it has been known, for example, a method, in which a metal alkoxide is used as a raw material as well as a sol-gel method, as disclosed in Japanese Patent Application titled "Method of Producing Ion-Selective Glass Electrode" (Japanese Patent Application No. Sho 63-312736) and filed on December 10, 1988 by the present applicant.

This conventional method has a superior advantage in that a pH-responsive membrane of stabilized quality can be obtained, but has disadvantages in that it is difficult to prepare a stabilized coating solution, the manufacturing process being complicated, and in that the manufacturing expenses are increased.

### Summary of the Invention

It is an object of the present invention to provide a method of producing a pH-responsive membrane which can be conducted easily and inexpensively to obtain a pH-responsive membrane uniform in thickness without using a large-scale apparatus and which also allows to optionally adjust the film-thickness of the membrane.

According to the present invention this object is achieved by a method of producing a pH-responsive membrane, characterized in that a coating solution mainly comprising tantalum alkoxide is fallen drop by drop on a surface of an electrode substrate rotating at an appointed speed to form a thin film of said coating solution on said substrate by this spin coating method. followed by drying and baking to form a pH-responsive membrane formed of a thin film made of tantalum pentaoxide having an appointed film-thickness on said electrode substrate.

According to another embodiment this object is achieved by a method of producing a pH-responsive membrane, characterized in that an electrode substrate is immersed in a coating solution mainly comprising tantalum alkoxide followed by pulling up said electrode substrate at an appointed speed to form a thin film of said coating solution on said substrate, then drying and baking to form a pH-responsive membrane formed of a thin film made of tantalum pentaoxide having an appointed film-thickness on said electrode substrate.

According to said first embodiment, said pH-responsive membrane having an appointed film-thickness can be formed on a surface of the electrode substrate by suitably repeating the spin coating method followed by drying and baking.

According to said second embodiment, the pH-responsive membrane having an appointed film-thickness can be formed on a surface of the electrode substrate by suitably selecting the speed at which the electrode substrate immersed in said coating solution mainly comprising tantalum alkoxide is pulled up.

### Brief Description of the Drawings

A first preferred embodiment of the present invention is shown in Figs. 1 to 3, in which
**Fig. 1** is a flow chart showing a method of producing a pH-responsive membrane;
**Fig. 2** is a diagram showing the embodiment wherein an electrode substrate is subjected to the spin coating to form a thin film; and
**Fig. 3** is a diagram showing one example of a pH-measuring electrode with a pH-responsive membrane, which has been produced by the method of producing a pH-responsive membrane according to the invention;
**Fig. 3 (A)** is a perspective view and **Fig. 3 (B)** is a sectional view of said pH-measuring electrode;
**Fig. 4** is a diagram showing one example of a pH-measuring electrode with a pH-responsive membrane, which has been produced by a method of producing a pH-responsive membrane according to the second preferred embodiment of the present invention;
**Fig. 4 (A)** is a plan view and **Fig. 4 (B)** is a sectional view of **Fig. 4 (A)** taken along the line A - A thereof.

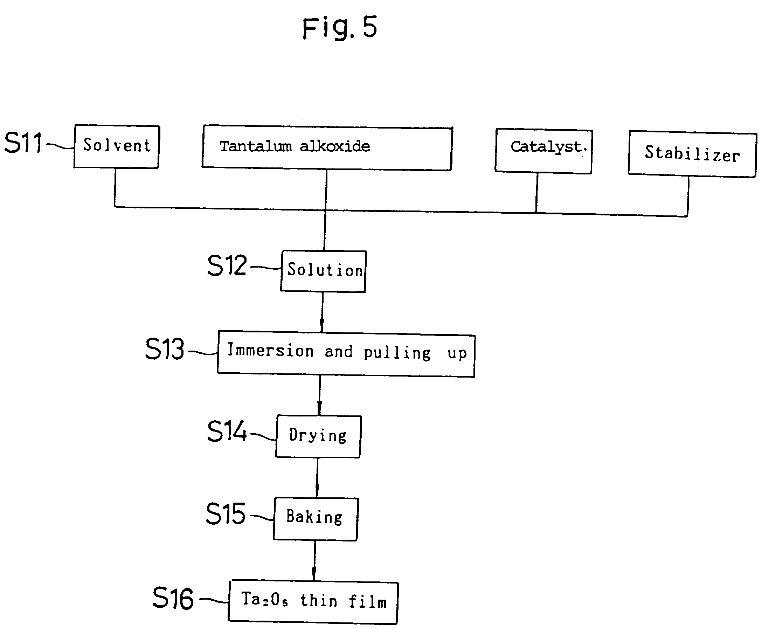

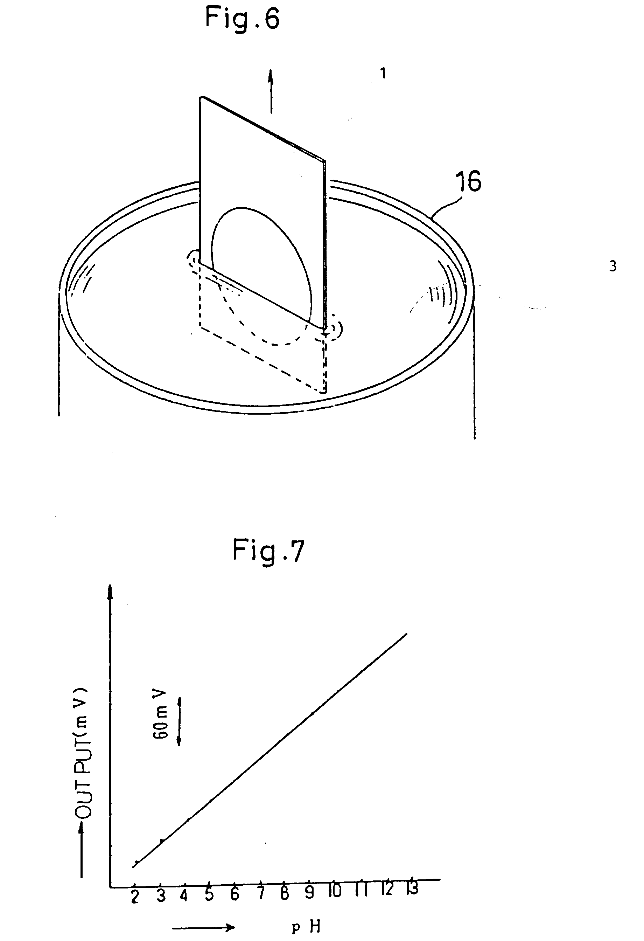

A third preferred embodiment of the present invention is shown in Figs. 5 and 6, in which
**Fig. 5** is a flow chart showing a method of producing a pH-responsive membrane; and
**Fig. 6** is a diagram showing the embodiment wherein a thin film is formed by immersing and pulling up an electrode substrate.
**Fig. 7** is a diagram showing pH-responsive characteristics of a thin film produced by a method according to the present invention.

### Detailed Description of the Preferred Embodiments

The preferred embodiments of the present invention will be described below with reference to the drawings.

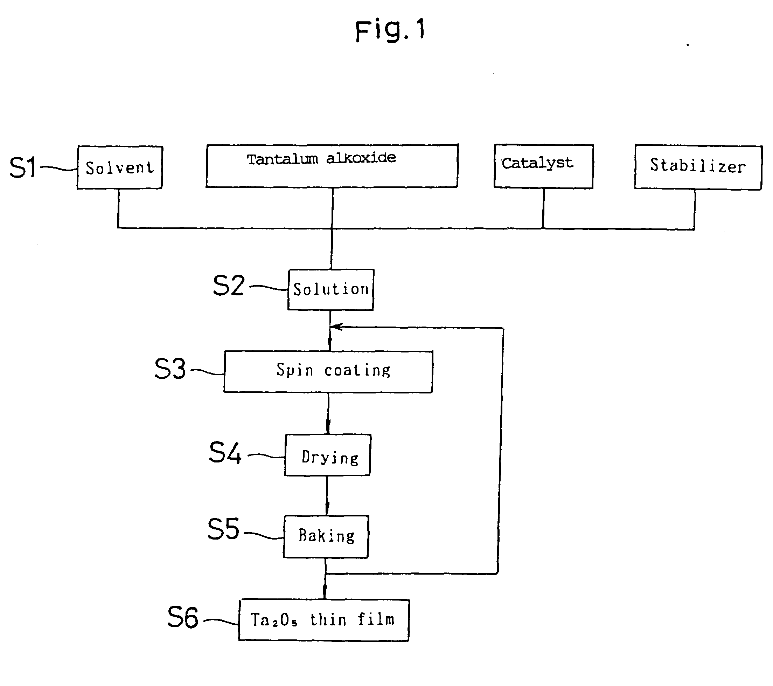

A first preferred embodiment of the present invention is shown in Figs. 1 to 3. In said first preferred embodiment, as shown in Fig. 1, pentaethoxytantalum [Ta-(OC₂H₅)₅] used as tantalum alkoxide [Ta-(O-R)₅] is dissolved in dehydrated ethyl alcohol as a solvent in a quantity of 10 % by weight (5 % by weight as Ta₂O₅) and then acetic acid as a catalyst and acetyl acetone as a stabilizer are added to the resulting solution in a quantity by weight corresponding to 2 times the molar ratio based on pentaethoxytantalum (step S1), followed by sufficiently mixing without being brought into contact with moisture to obtain a coating solution (step S2).

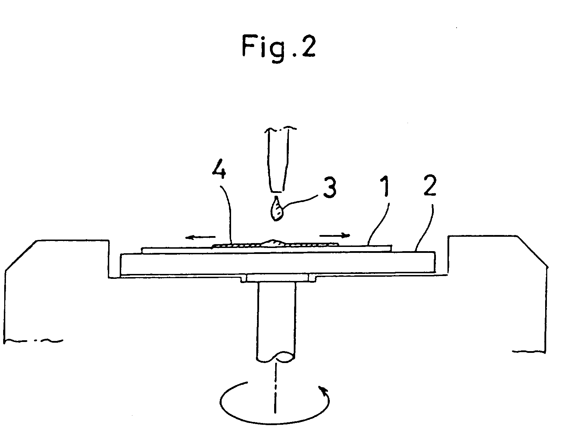

The resulting coating solution is then fallen drop by drop on a surface of an electrode substrate 1 by the use of an apparatus as shown in Fig. 2. For example, a metallic layer made of gold and the like is formed on the back side of a substrate, such as a silicon wafer, and a naturally oxidized surface layer is removed to obtain said electrode substrate 1.

The resulting electrode substrate 1 is placed on a disk 2 rotatably driven by means of a motor (not shown) and held horizontally under the condition that a right side faces upward, and said disk 2 is rotated for 30 seconds at, for example 3.000 rpm by means of said motor to fall a coating solution 3 drop by drop with a drop volume of, for example, 100 to 200 µl from a position above the electrode substrate 1 to from a thin film by the spin coating (step S3).

Subsequently, the electrode substrate 1, which has been subjected to the above described treatment, is dried for 30 minutes at 150°C (step S4) and then heat treated (baked) for 30 minutes at 500°C (step S5) to form a Ta₂O₅ thin film 4 on said surface of the electrode substrate 1. The procedures of steps S3 to S5 must be repeated suitable times in order to obtain said thin film 4 having a thickness of, for example, 600 to 650 Å (60 to 65 nm).

According to the above described preferred embodiment, said coating solution 3 used in the formation of the thin film 4 can be prepared in high reproductivity by selecting a solvent taking its wettability to glass and said silicon substrate into consideration and controlling its viscosity, temperature and humidity. In addition, pentaethoxy tantalum (one kind of tantalum alkoxide), which is a main ingredient of the coating solution 3, is a single ingredient, so that it is easy to control the hydrolytic conditions and also the baking conditions are the same one and thus the thin film having a uniform film-thickness can be formed.

The thin film 4 produced by the above described method exhibits a resistance value of 10⁸ to 10⁹ Ω in pinhole-free case and pH-responsive characteristics as shown in Fig. 7.

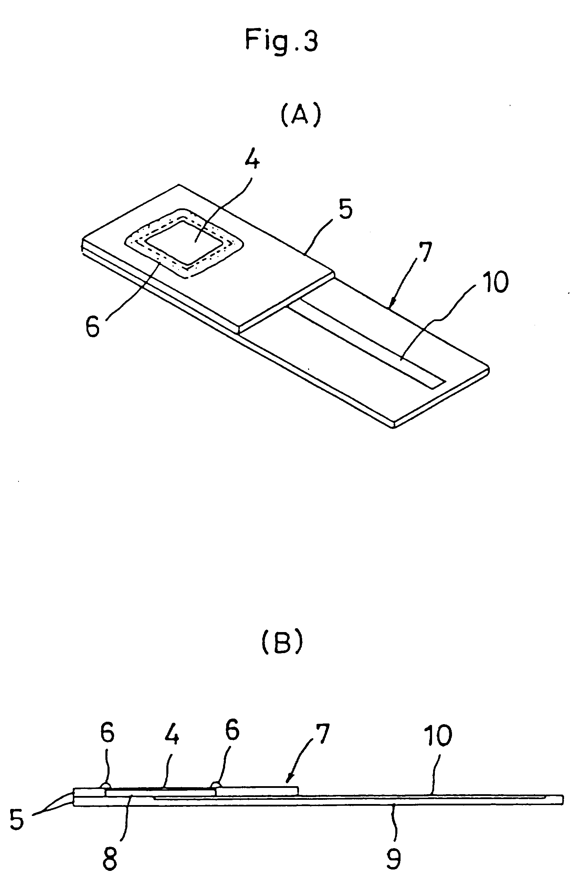

A pH-measuring electrode 7, which can be immersed in a liquid, can be composed by sealing the thin film 4 to a substrate 5 comprising for example polyethylene terephthalate substrates laminated with silicone family resin adhesives 6, as shown in Fig. 3 (A), (B). In addition, referring to Fig. 3 (A), (B), reference numeral 8 designates a silicon substrate or an ISFET, reference numeral 9 designates a silicon substrate, and reference numeral 10 designates a lead-taking out conductor portion.

Although pentaethoxytantalum was used as tantalum alkoxide in the above described first preferred embodiment, penta-x-butoxytantalum (x = i.n. sec or t) [Ta(OC₄H₉)₅] may be used in place of pentaethoxytantalum.

Accordingly, in a second preferred embodiment, penta-x-butoxytantalum is dissolved in ethyl alcohol as a solvent in a quantity of 20 % by weight (10 % by weight as Ta₂O₅) and then a catalyst, such as formic acid and hydrochloric acid, and a stabilizer, such as diethyl malonate and ethylacetoacetic acid are added to the resulting solution in a quantity by weight corresponding to 4 times the molar ratio based on alkoxide, followed by sufficiently mixing without being brought into contact with moisture to obtain a coating solution. A thin film is formed by this coating treatment as in the above described first preferred embodiment. In this case, the procedures of steps S3 to S5 shown in Fig. 1 may be repeated in order to obtain the appointed film-thickness.

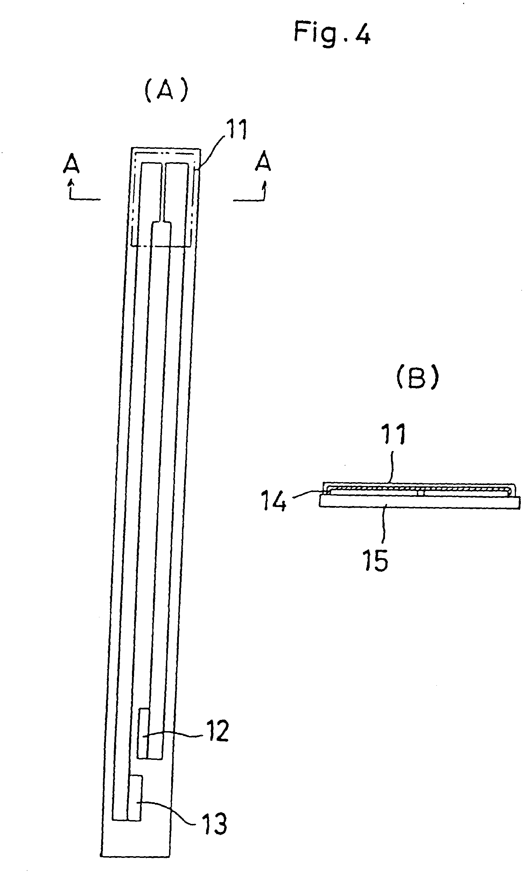

Said thin film produced by a method according to this second preferred embodiment exhibits pH-responsive characteristics as shown in Fig. 7. It can be used in a gate oxidized film of ISFET and a responsive membrane of separated gate type ISFET and its package structure is as shown in Fig. 4. Referring to Fig. 4, reference numeral 11 designates a thin film, reference numeral 12, 13 designate a source electrode and a drain electrode made of aluminum. respectively, reference numeral 14 designates a SiO₂ layer, and reference numeral 15 designates a silicon substrate.

In addition, in this preferred embodiment, penta-i-propoxytantalum and penta-n-propoxytantalum may be used in place of penta-x-butoxytantalum.

Although the thin films 4, 11 were formed by the spin coating in either the above described first preferred embodiment or the above described second preferred embodiment, the thin film can be formed also by the immersing-pulling up method.

Further, a third preferred embodiment of the present invention is shown in Figs. 5. 6. In this preferred embodiment, as shown in Fig. 5, pentamethoxytantalum [Ta-(OCH₃)₅] used as tantalum alkoxide is dissolved in dehydrated ethyl alcohol as a solvent in a quantity of 5 % by weight and then acetic acid as a catalyst and ethyl acetoacetic acid as a stabilizer are added to the resulting solution in a quantity by weight corresponding to 2 times the molar ratio based on pentamethoxytantalum (step S11), followed by sufficiently mixing without being brought into contact with moisture to obtain a coating solution 3 (step S12).

20 ml of this solution 3 is put in a beaker 16, as shown in Fig. 6. An electrode substrate 1 is immersed in the coating solution 3 and then pulled up at a rate of 0.1 to 0.6 mm/sec to from a thin film (step S13).

The electrode substrate 1, which has been subjected to the above described treatment, is dried for 30 minutes at 150°C (step S14) and then heat treated for 30 minutes at 500°C (step S15) to from a Ta₂O₅ thin film having an appointed film-thickness on a surface of the electrode substrate 1.

Said thin film produced in the above described manner exhibits pH-responsive characteristics as shown in Fig. 7.

As above described, the coating solution mainly comprising tantalum alkoxide is fallen drop by drop on the surface of the electrode substrate rotating at the appointed speed to form the pH-responsive membrane formed of a thin film made of tantalum pentaoxide having the appointed film-thickness on the electrode substrate by the spin coating method in the first embodiment of the present invention and the electrode substrate is immersed in the coating solution mainly comprising tantalum alkoxide followed by pulling up the electrode substrate at the appointed speed to form the pH-responsive membrane formed of a thin film made of tantalum pentaoxide having the appointed film-thickness on the electrode substrate in the second embodiment of the present invention, so that the following superior effects can be achieved.
1. The uniform thin film can be formed in a moment;
2. It is sufficient to use a small amount of expensive coating solution;
3. The range of film-thickness can be optionally changed and the superthin film to the thick film of µm order can be easily produced; and
4. No large-scale apparatus is required.

Accordingly, the desired pH-responsive membrane can be inexpensively produced in large quantities.

## Claims

1. A method of producing a pH-responsive membrane, **characterized in** **that** a coating solution mainly comprising tantalum alkoxide is fallen drop by drop on a surface of an electrode substrate rotating at an appointed speed to form a thin film of said coating solution on said substrate by this spin coating method, followed by drying and baking to form a pH-responsive membrane formed of a thin film made of tantalum pentaoxide having an appointed film-thickness on said electrode substrate.

2. A method of producing a pH-responsive membrane, **characterized in** **that** an electrode substrate is immersed in a coating solution mainly comprising tantalum alkoxide followed by pulling up said electrode substrate at an appointed speed to form a thin film of said coating solution on said substrate then drying and baking to form a pH-responsive membrane formed of a thin film made of tantalum pentaoxide having an appointed film-thickness on said electrode substrate.

3. The method of producing a pH-responsive membrane as set forth in claim 1 or 2, **characterized in that** pentaethoxytantalum or penta-x-butoxytantalum (x = i, n, sec or tert.) is used as tantalum alkoxide.

## Patentansprüche

1. Verfahren zur Herstellung einer pH-empfindlichen Membran, **dadurch** **gekennzeichnet,** daß eine hauptsächlich Tantalalkoxid umfassende Beschichtungslösung tropfenweise auf eine Oberfläche eines Elektrodensubstrats, welches mit einer festgelegten Geschwindigkeit rotiert, fallengelassen wird, um auf dem Substrat durch dieses Drehbeschichtungsverfahren einen Dünnfilm aus der Beschichtungslösung zu bilden, anschließend ein Trocknen und Brennen zur Bildung einer pH-empfindlichen Membran auf dem Elektrodensubstrat erfolgt, die aus einem aus Tantalpentoxid einer festgelegten Filmdicke hergestellten Dünnfilm gebildet ist.

2. Verfahren zur Herstellung einer pH-empfindlichen Membran, **dadurch** **gekennzeichnet,** daß ein Elektrodensubstrat in eine hauptsächlich Tantalalkoxid umfassende Beschichtungslösung eingetaucht wird, worauf das Hochziehen des Elektrodensubstrats mit einer festgelegten Geschwindigkeit erfolgt, um auf dem Substrat einen Dünnfilm aus der Beschichtungslösung zu bilden, danach Trocknen und Brennen, zur Bildung einer pH-empfindlichen Membran auf dem Elektrodensubstrat, die aus einem aus Tantalpentoxid mit einer festgelegten Filmdicke hergestellten Dünnfilm gebildet ist.

3. Verfahren zur Herstellung einer pH-empfindlichen Membran nach Anspruch 1 oder 2, **dadurch gekennzeichnet**, daß Pentaethoxytantal oder Penta-x-butoxytantal (x = i, n, sec oder tert) als Tantalalkoxid verwendet wird.

## Revendications

1. Procédé de fabrication d'une membrane sensible au pH, caractérisé en ce que l'on fait tomber une solution de revêtement comprenant essentiellement un alcoxyde de tantale, au goutte à goutte, sur une surface d'une électrode substrat tournant à une vitesse déterminée, pour former une pellicule fine de ladite solution de revêtement sur ledit substrat par cette méthode de revêtement par rotation, puis on procède à un séchage et à une cuisson pour former une membrane sensible au pH, constituée d'une pellicule fine de pentaoxyde de tantale ayant une épaisseur de pellicule déterminée, sur ladite électrode substrat.

2. Procédé de fabrication d'une membrane sensible au pH, caractérisé en ce que l'on immerge une électrode substrat dans une solution de revêtement comprenant essentiellement un alcoxyde de tantale, puis l'on retire ladite électrode substrat à une vitesse déterminée pour former une pellicule fine de ladite solution de revêtement sur ledit substrat, puis l'on procède à un séchage et à une cuisson pour former une membrane sensible au pH constituée d'une pellicule fine de pentaoxyde de tantale ayant une épaisseur de pellicule déterminée, sur ladite électrode substrat.

3. Procédé de fabrication d'une membrane sensible au pH, selon la revendication 1 ou 2, caractérisé en ce que l'on utilise comme alcoxyde de tantale du pentaéthoxytantale ou du penta-x-butoxytantale (x = i, n, sec ou tert.).
